# EUROPEAN PATENT APPLICATION

(11) **EP 0 726 435 A1**
(43) Date of publication of application: **14.08.1996**
(21) Application number: 96101483.4
(22) Date of filing: 02.02.1996
(51) Int. Cl.: F26B 15/18

(54) **Drying and discharge conveyor for finished packs of cigarettes or similar, particularly in a cigarette packing machine**

(30) Priority: 09.02.1995 IT GE950013
(71) Applicant: SASIB S.p.A., I-40128 Bologna (IT)
(72) Inventor: Milani, Massimo, I-40033 Casalecchio di Reno (IT)
(74) Representative: Porsia, Bruno

(57) **Abstract**

A drying and discharge conveyor for finished packs of cigarettes or similar, particularly in a cigarette packing machine, comprises a channel (3, 3', 7) for a row of packs (P) of cigarettes disposed one adjacent to the next, the lateral walls of this channel consisting of panels (3, 3') along which a continuous conveyor belt (1, 2) slides by steps in the direction of the axis of the channel, these belts (1, 2) interacting by frictional adhesion with the facing opposite sides of the packs (P) of cigarettes. According to the invention, in the conveyor channel the packs (P) are subjected to a flow of drying air, preferably hot, and form the upper wall of a lower duct (C) for the drying air which is provided in the area of the bottom of the conveyor channel.

## Description

The invention relates to a discharge conveyor for finished packs, particularly in a cigarette packing machine, comprising a channel for a row of packs of cigarettes disposed one adjacent to the next, the lateral walls of this channel consisting of panels along which a continuous conveyor belt slides in steps in the direction of the axis of the channel, these belts interacting by frictional adhesion with the facing opposite sides of the packs of cigarettes.

Particularly in cigarette packing machines, discharge conveyors of this type act as drying chambers for the adhesive of the packs. They are therefore of a certain length, to ensure that at their discharge ends the packs, or rather the adhesive, is fully dry. The length of the conveyors is also determined by the operating speed of the packing machine, in other words the number of finished packs per unit of time.

The object of the invention is to provide a discharge conveyor of the said type which, by means of a relatively simple and inexpensive construction, enables greater efficiency and reliability of operation to be obtained while providing shorter drying times, in other words shorter lengths of the drying conveyors to give the same drying conditions and a degree of drying of the adhesive necessary to ensure that the shape of the packs is reliably retained also during the subsequent stages of the production cycle, the whole being combined with complete synchronization of operation with the processing machine associated with the conveyor.

The invention resolves the above problem with a discharge conveyor of the type described initially, in which, in the conveyor channel, the packs are subject to a flow of drying air, preferably hot, and form the upper wall of a lower duct for the drying air which is provided in the area of the bottom of the conveyor channel.

For this purpose, the packs in the conveyor channel may advantageously rest on longitudinal sliding guides which are raised above the bottom of the conveyor channel and which leave open a substantial portion of the transverse section of the channel near the lower sides of the packs, while in the area underneath the packs the conveyor channel has at least one and preferably a plurality of drying air supply apertures.

Drying air discharge apertures may also be provided and may, for example, be disposed at the ends of the conveyor channel.

According to a further improvement, the belts for propelling the packs in the conveyor channel are driven by the same driving motor as the packing machine, by means of a transmission provided with automatic and instantaneous means of engagement and disengagement. The direct coupling between the processing machine and the belt ensures a condition of synchronization between them at all times and enables the advance of the belt and consequently that of the row of packs in the conveyor channel to be halted even at the moment of an unplanned stoppage of the processing machine, in such a way as to prevent the formation of empty spaces between the row of packs in the conveyor channel and the packs discharged into it on the restarting of the processing machine. The automatic and instantaneous means of engagement and disengagement operate principally in the case of rejection of defective packs before the conveyor channel. Consequently, at the moment of rejection of a pack, the advance of the row of packs in the conveyor channel is halted, preventing the non-defective pack discharged from the processing machine immediately after the defective pack from being disposed at a distance from the last pack of the row in the conveyor channel and thus forming an empty space or a gap in the row of conveyed packs.

As an alternative to the above, when the processing machine before the drying and discharge conveyor is provided with two or more separate driving motors for one or more processing units, the automatic and instantaneous means of engagement and disengagement may come into operation to stop the advance of the conveyor belts when one or more motors of the processing machine are stopped in an unplanned way.

The conveyor may be made in modular form, with an initial module having the return rollers of the two opposing belts, a final module having the return rollers, the tensioning rollers and the drive rollers of the belts and having the automatic and instantaneous means of engagement and disengagement, a plurality of intermediate modules each of which has a supporting structure for a segment of conveyor channel comprising the lateral panels along which the belts slide, the raised sliding guides for the packs and the bottom wall of the conveyor channel.

The means for the supply of the hot and/or cold drying air may be associated with each module or only with some of the modules. In these modules, the drying air supply means are integrated in the supporting structure of the segments of channel which is suitably made in the form of a hollow column, while the said column has at least one air intake aperture and at least one air delivery aperture in the bottom wall of the conveyor channel in the area coinciding with the section of the column.

Additionally, means for the supply of drying air are also associated with the initial module and consist of the discharge of the suction pump used to generate depressurized air for driving the processing units of the packing machine.

According to an improvement, the hot drying air may also consist of the cooling air of the pump motor and possibly also that of further motors provided for driving the conveyor and/or the processing machine. In this case various options are possible. A first option may provide means of guiding the heated cooling air directly into the lower duct for the drying air immediately under the row of packs. A second option may provide for at least a top and/or also a lateral shell which covers the drying conveyor from the outside and helps to form at least an upper and/or a lateral chamber or duct for the drying air which consists of the heated cooling air discharged from the motor or motors inside the said shell. In this case, the pump motor and/or any further motors are advantageously housed in the supporting structure of the conveyor channel inside the said shell. The means of supplying the drying air into the lower drying air duct under the row of packs may draw the air either from outside the said shell or from inside it, preferably from inside the lateral area covered by the shell. The drying air is supplied to the channel under the packs from the means or by the motors. Cooling air intake ducts communicating with the outside are associated with the pump in the area of the motor cooling fan.

A further improvement may provide for the recovery of air heated by any operating parts and units and/or motors of the processing machine, which usually generate a sufficient quantity of heat which is dispersed into the environment, and for the guiding of this air into the upper duct and/or lateral ducts and/or lower duct for drying air.

The invention also relates to other characteristics which further improve the discharge conveyor described above and which form the subject of the dependent claims.

The particular characteristics of the invention and the advantages derived therefrom will be more clearly understood from the description of some preferred embodiments of the invention, illustrated solely by way of example and without restriction in the attached drawings, in which:
Fig. 1 is a plan view from above of a conveyor according to the invention.
Fig. 2 is a side view of the conveyor according to Fig. 1.
Fig. 3 shows a transverse section through the area of a supporting column of a module of the conveyor according to the preceding figures.
Fig. 4 is an enlarged plan view from above of an intermediate module of the conveyor according to the preceding figures.
Fig. 5 is a schematic view from above of the drive rollers of the two propelling belts and the associated transmission unit of the driving motor.
Fig. 6 shows an axial section through the coupling for the automatic and instantaneous engagement and disengagement of the propelling belts with and from the driving means.
Fig. 7 is a section along the line VII-VII through Fig. 6 with the coupling in the engaged position.
Fig. 8 shows a detail of the coupling shown in the preceding figures, in the disengaged state.
Fig. 9 shows an axial section through a return roller at the entry end of the conveyor.
Fig. 10 shows an axial section, transverse with respect to the direction of advance of the packs, through the belt tensioning means.

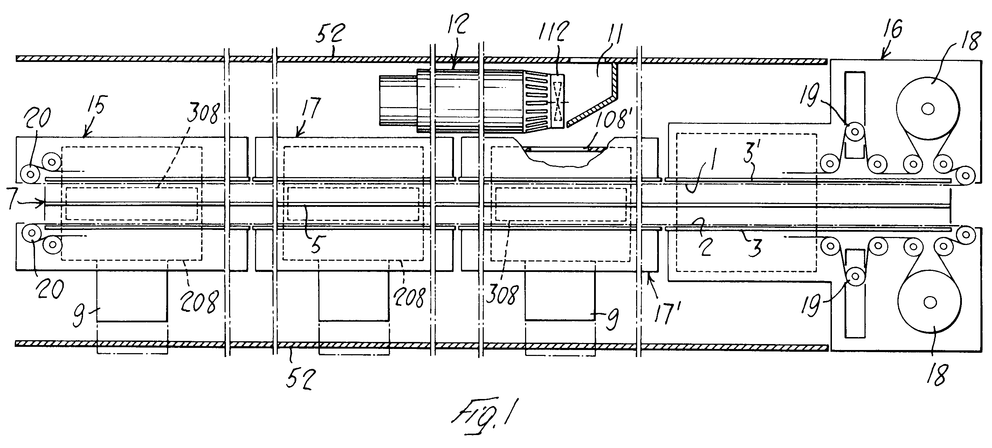

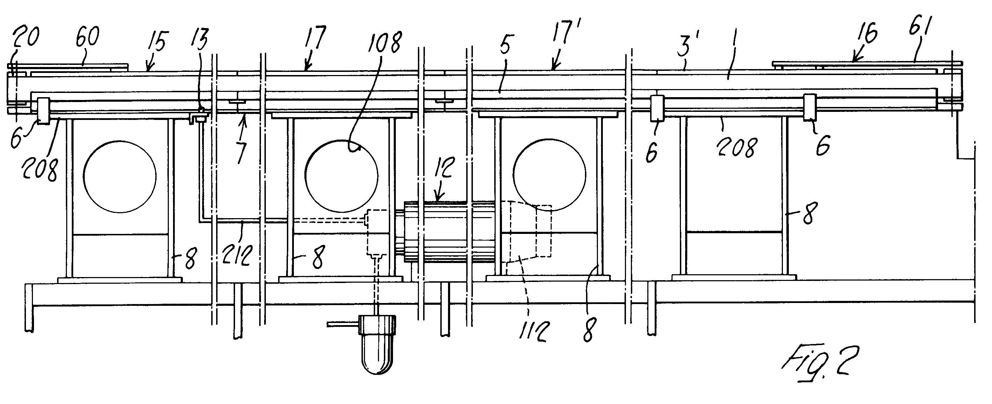

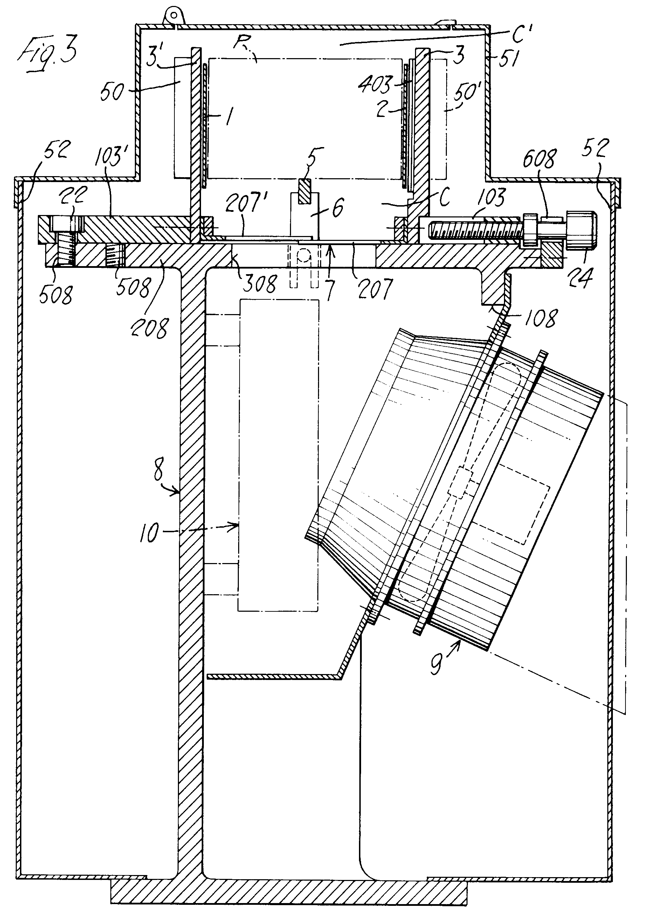

With reference to Fig. 1, a discharge conveyor for a continuous row of packs of cigarettes leaving a cigarette packing machine comprises two vertical conveyor belts 1, 2 which slide along opposing vertical lateral walls 3, 3' of a conveyor channel, gripping between them with a certain force the opposite sides of the packs P facing the said vertical lateral walls. The packs P of cigarettes are supplied to the conveyor one after another, and form a continuous row of adjacent packs, one against another. As is clearly shown in Fig. 3 in particular, their lower sides 4 rest on a central vertical rib 5 which is supported at specified distances in complementary supporting sockets 6 which are integral with the supporting structure of the channel and which keep the said rib 5 in a raised position with respect to the bottom 7 of the channel. The supporting structure of the conveyor channel consists of a plurality of vertical columns 8 which have a hollow section, means 9, 10 being provided inside some of these columns for the generation of a flow of hot air. The tubular columns 8 are provided with lateral apertures 108 for the intake of ambient air, while the lateral panels 3, 3' of the conveyor channel and the central supporting rib 5 are supported by an upper plate 208 which is integral with the column 8 and which has an aperture 308 next to the bottom of the conveyor channel. Next to the said aperture 308, the bottom wall 7 of the conveyor channel has slots 107 through which the air passes from the column 8 into the free part of the channel under the packs P. As is clearly shown in Fig. 3, the median supporting rib 5 does not form an impediment to the inflow of air on to the lower sides of the packs, which therefore form the containing cover of a lower duct C for the drying air. In the illustrated embodiment, this duct is open at the entry and exit ends of the conveyor channel, but apertures for the discharge of the air supplied under the packs P may, or may not, be provided at other points or in other areas of the channel.

The means of supplying air under the packs P in the conveyor channel may be of any type, for example simple fans if no heating of the air is desired, or fans combined with means of heating the air, preferably of the electrical type, as indicated by the number 9. Alternatively it is possible to provide heating means 10 separate from the fans, either alone or in combination with the fans. In this case it is possible to create a circulation of hot air from the external environment under the packs P by simple convection.

The heating power is preferably between 150 and 1500 watts for each module for supplying drying air to the lower drying duct, and it is possible to provide means for the automatic control of a maximum temperature which may be preset. The hot air is supplied by convection and/or by the action of the fans to the part of the duct under the packs P and is distributed along the said duct towards the ends.

Additionally, means 50, 50' of heating at least one and possibly both the lateral panels 3, 3' along which the two opposing propelling belts 1,2 slide may advantageously be provided in combination with the flow of hot air which makes a considerable contribution to the rapid drying of the packs P. This may be done, for example, by fitting suitable heating resistances in thermal contact with the panels 3, 3' on the outer sides of these panels.

The heat dissipated to the environment from the lateral heating means 50, 50' may advantageously be confined suitably, as indicated in Fig. 3, along the conveyor channel by means of an upper covering wall 51 which may extend over the whole length of the channel and which forms an upper duct C' for the drying air. In this case, the upper covering wall 51 is also superimposed laterally on the lateral panels 3, 3' and the heating means 50, 50'. It is also made at least partially openable to permit access to the pack conveyor channel.

According to a further improvement, as shown in Figs. 1 and 2, the upper covering wall 51 is connected to lateral shell walls 52 of the supporting structure of the drying and discharge conveyor, these walls also extending preferably over the whole length of the conveyor and being provided with openable parts or having a modular construction to give access to the supporting structure. The lateral walls 52 and the upper covering wall 51 constitute a shell of the conveyor which forms a housing chamber for the conveyor itself and constitutes the upper channel C' for the drying air. The pump 12 for generating the pressure drop for the operation of some of the operating units of the processing machine may advantageously be housed inside the shell 51, 52 and in the lower area of the supporting structure of the conveyor. The pump 12 which may be driven by an electric motor provided with a cooling fan 112 is positioned with the said fan next to an intake aperture or duct 11 for the ambient cooling air, while the said cooling air when heated by the motor is discharged into the shell 51, 52, contributing to the heating of the conveyor housing chamber formed by the shell 51, 52.

Alternatively to or in combination with the said pump 12, further driving motors of operating units of the processing machine and/or of additional operating units may also be fitted inside the shell 51, 52 and in the supporting structure of the conveyor.

According to a variant embodiment which may be provided either alternatively or in combination with the above, the cooling air heated by the motor of the pump 12 and/or from any additional motors may also be guided into the lower duct C for the drying air, as illustrated for guidance in Fig. 1, in which the area of the cooling fan 112 of the motor, in other words the area of discharge of the cooling air, is positioned next to an aperture 108' in a column 8.

Since the packing machine is driven by an electric motor, the said motor may be housed in the supporting structure of the discharge conveyor, with the cooling fan of the motor communicating with the external environment through an intake channel 11 and with the conveyor channel through an aperture 108' in a column 8.

With reference to Fig. 2, it is also possible to use as drying air the discharged air from the depressurization pump 12, this air generally being advantageously hot. In the embodiment shown, the air discharged from the depressurization pump 12 is supplied to the lower duct C for the drying air. For this purpose, the discharge end 212 of the pump 12 is connected to the lower side of the conveyor channel, for example by means of a suitable union 13 which is fixed to the bottom face 7 of the conveyor channel (Fig. 1). The above description is not to be interpreted restrictively, since the discharge air from the pump 12 could also be supplied alternatively or additionally to the interior of the shell 51, 52 or to the interior of the upper duct C' for the drying air, or could be guided into the lower duct C for the drying air through a column 8.

The presence of the shell 51, 52 in which an environment which is heated with respect to the outside is created also permits a further alternative which is shown in Figs. 1 and 3 and consists in the fact that the air guided into the lower duct for the drying air may be taken by the means 9, 10 housed in the tubular columns 8 directly from the outside of the shell 51, 52 or from the inside of the shell, in which case it is preheated by a certain amount with respect to the ambient air.

The hot drying air may also be taken from other sources, such as other parts, operating units or driving means of the processing machine and/or of further associated devices which generate heat and dissipate it freely into the environment, providing forced flows of heat-carrying air dissipated from the said parts or operating units or from the said driving means, which are suitably guided either in combination or alternatively into the different ducts C, C' for the drying air of the conveyor or simply into the interior of the shell 51, 52 according to one or more of the methods described previously.

The means for the generation and/or the supply of drying air according to the described variants and improvements may be activated alternatively or in combination either manually or automatically with means for monitoring the temperature in the conveyor channel and possibly with means of automatic control of the means of generation and/or supply of the drying air, with the possibility of setting desired ranges or predetermined actual temperatures.

Advantageously, as shown in the figures, the conveyor channel may be made in modular form, comprising at least one initial module 15 provided with the idle return rollers 20 at the entry end; at least one terminal module 16 for the return and drive of the propelling belts 1, 2 with which the drive rollers 18 and tensioners 19 are associated; and at least one or more intermediate modules 17, 17'. This is important since it enables the drying and discharge conveyor, acting as a drying chamber, to be adapted to the different operating speeds of the packing machine or to the drying times depending on the type of materials used for the packs and on the type of adhesive used.

Each module 15, 16, 17, 17' has the two lateral panels 3, 3' which are of predetermined length, a part of the median supporting rib 5 and a part of the bottom wall 7.

The initial module 15 may advantageously be made with a length such that the pump 12 and/or the driving motor are housed within it or within at least one or two successive intermediate modules 17, 17' which are required to provide the minimum length of the conveyor channel.

Each module 15, 16, 17, 17' may have a hollow supporting column 8 and it is possible to provide the air heating and supply means 9, 10 in each hollow column 8 or only in those of certain modules.

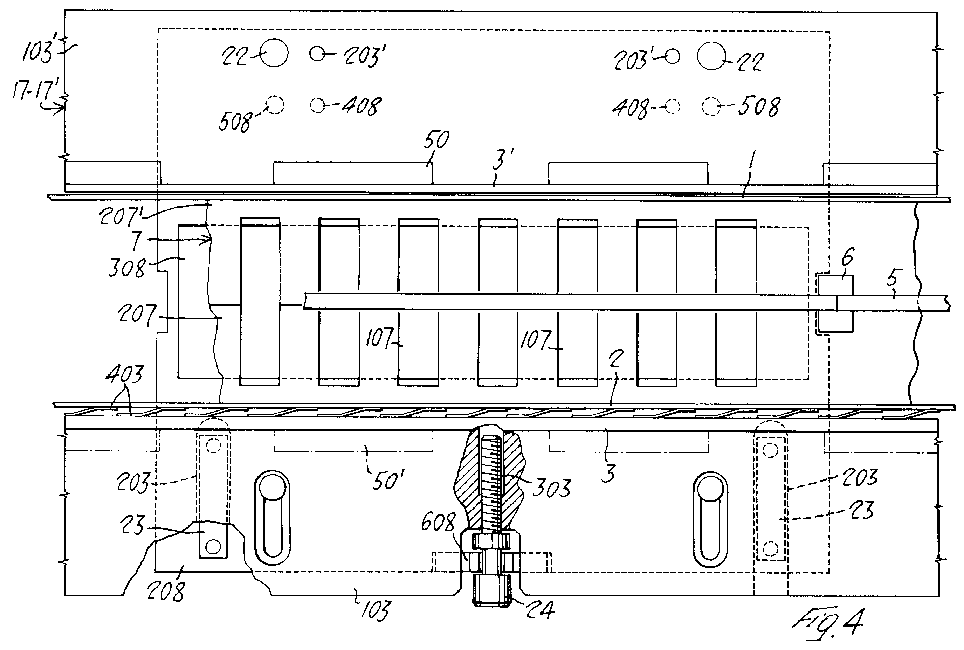

With reference to Fig. 4, to permit adaptation to different formats of packs P and to any different orientations of the packs leaving the packing machine, the lateral panels 3, 3' are made adjustable with respect to their distance. Both panels may be supported so that they are adjustable continuously or by predetermined steps, or, as illustrated in Fig. 4, one of the panels 3' may be adjustable between two alternative predetermined positions, while the opposite panel 3 is continuously adjustable. Naturally, this is also applicable to the return rollers 20 and the drive and tensioning rollers 18, 19. In this case, the said rollers may be fitted in their predetermined relative positions in boxes or cages 60, 61 which are supported so that they are movable transversely with respect to the direction of advance of the packs P on the supporting structure 8 of the corresponding module 15, 16.

As shown in Figs. 3 and 4, the panels 3, 3' are made L-shaped and their horizontal members 103, 103' rest on the upper plates 208 of the columns 8. The plate 103' of one of the two panels 3' has two pins 203' which are aligned with each other in the direction of advance of the packs P and can be inserted in either of two pairs of holes 408 in the plate 208, the pairs of holes being disposed at predetermined distances from the median axis of the conveyor channel. Fixing bolts 22, which are engaged in either of two pairs of threaded holes 508 associated with the holes 408 for the pins 203', are also provided.

The horizontal member 103 of the opposite panel 3 is guided slidably parallel to itself and transversely with respect to the conveyor channel, for example by means of transverse guide ribs 23 projecting from the plate 208 and engaged in grooves 203 made in the lower face of the horizontal member 103 of the panel 3. A threaded pin 24, which is fitted so that it is freely rotatable but not axially slidable in a support 608 of the plate 208 and which has its threaded end engaged in a threaded hole 303 of the horizontal member 103, is provided in the median area of the horizontal member 103 of the panel 3. The pin is orientated horizontally and transversely with respect to the axis of the conveyor channel.

The surface of one of the two panels 3 on which the propelling belt 2 slides is preferably made to be elastically yielding transversely with respect to the conveyor channel. In the example shown in Figs. 3 and 4, this is achieved by providing on the inner side of the said panel 3 a plurality of elastic vertical strips 403 which are distributed over the length of the said panel. Each elastic strip 403 has two opposing wings, substantially parallel to each other, one of which is for fixing to the panel 3, while the other is carried at the free end of an intermediate portion orientated transversely with respect to the panel 3 and inclined in the direction of advance of the propelling belt 2. The elastic strips 403 are spaced apart longitudinally with respect to the panel 3 in such a way that the wings on the free ends of the strips jointly form a surface on which the propelling belt 2 slides and act to adjust the compressive force on the packs P in the transverse direction with respect to the conveyor channel, keeping the force within the specified tolerances even in the case of minor variations in dimensions between the packs P of a single format, thus making the adjustment of the transverse position of the panel 3 less critical.

Additionally, to permit the movement of the two panels 3, 3' with respect to each other, the bottom wall 7 of the conveyor channel is made in two halves separated from each other along a longitudinal axis of the conveyor channel. The two plates 207, 207' are carried by and project from the corresponding panels 3, 3', the length of each plate being greater than half the width of the conveyor channel, with one plate overlapping the other. Their dimensions in the transverse direction with respect to the conveyor channel are such that the overlapping is ensured even in the condition of the maximum width of the conveyor channel, in other words the maximum spacing of the panels 3, 3' from each other. In the area of the grid of apertures 107 for the supply of hot air, each of the said plates 207, 207' is made in a suitably comb-like form with the strips separating the spaces forming the grid of apertures 107 coinciding and overlapping.

By this arrangement the conveyor channel may be adapted to the pack of cigarettes in such a way as to ensure in all cases the formation of a duct for the hot air under the lower faces of the packs, the duct being covered above the packs.

According to a further advantageous characteristic of the invention which enables synchronization to be achieved between the two propelling belts 1, 2 in order to avoid deformation of the packs during their transport, the two belts 1, 2 are driven by a common transmission 25.

The propelling belts 1, 2 may be driven continuously or step by step. In the latter case, the driving mechanism may have an intermittent drive device, for example an intermittent drive device with parallel axes such as that marketed by Colombo Filippetti of Casirate d'Adda, Bergamo, which is fitted before the device 27 and is not illustrated in detail.

Although, for the purposes of synchronization, the transmission 25 and the drive to the belts 1, 2 are common, it is also possible to provide an independent drive of the two belts 1, 2, in other words a transmission for each of the two belts 1, 2 with suitable means of mutual synchronization.

Additionally, in order to avoid the formation of gaps or vacant areas between one part of the row of packs and the subsequent packs supplied to the conveyor in case of malfunction of the production cycle, an automatic device 27 for instantaneous engagement and disengagement of the belts 1, 2 with and from the driving means is provided in the drive mechanism of the propelling belts 1, 2. The conditions which most frequently necessitate the operation of the automatic engagement and disengagement device 27 are the rejection of a defective pack by the processing machine before the conveyor channel. In this case, the activation of the automatic device 27 for instantaneous engagement and disengagement is provided in synchronization by the rejection unit of the processing machine, in such a way as to avoid the formation of gaps in the row of packs in the conveyor channel due to the absence of the rejected defective pack. However, when the processing machines have a plurality of driving motors for the different operating units it is possible that the intervention of the automatic engagement and disengagement device may be required in the case of the stopping of one or more of the said driving motors, this being controlled in this case by the control unit of the processing machine. If the processing machine is provided with a common driving motor for all the operating units operating in a synchronized way, it is possible to obtain a synchronized operation of the drying and discharge conveyor by taking the motion for operating the conveyor directly from the motor of the processing machine by means of a belt transmission 26 or similar.

The synchronization of the steps of the advance of the belts 1, 2 with the discharge of the finished packs from the processing machine is obtained by means of a suitable transmission ratio. The steps of the advance of the belts 1, 2 must correspond to the thickness of the pack. In order to be able to adjust the steps of the advance of the propelling belts and also to adapt the discharge conveyor to different formats of packs with different thicknesses, it is advantageous to provide a speed controller in the driving mechanism of the belts 1, 2. The speed controller which is not illustrated in detail is provided after the automatic device for instantaneous engagement and disengagement 27 and may be of any type known on the market, such as the chain speed controller with fine adjustment marketed by P.I.V. SA of Villeurbanne, which enables step adjustments down to +/- 0.1 mm to be made.

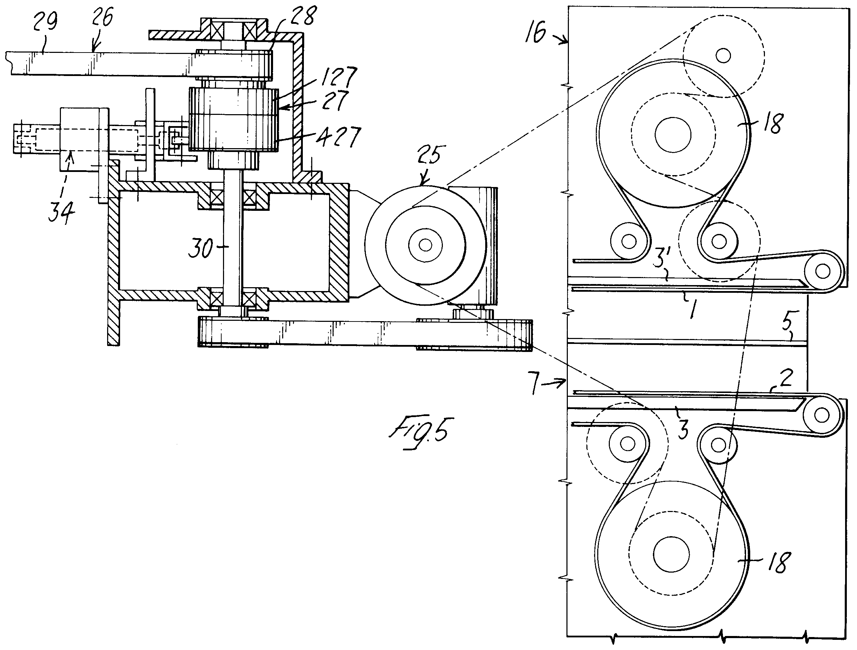

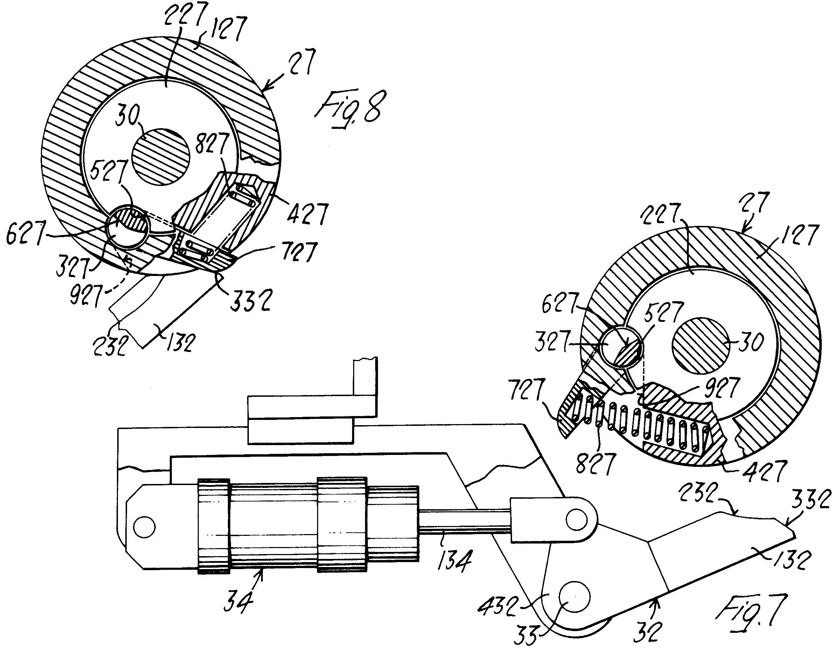

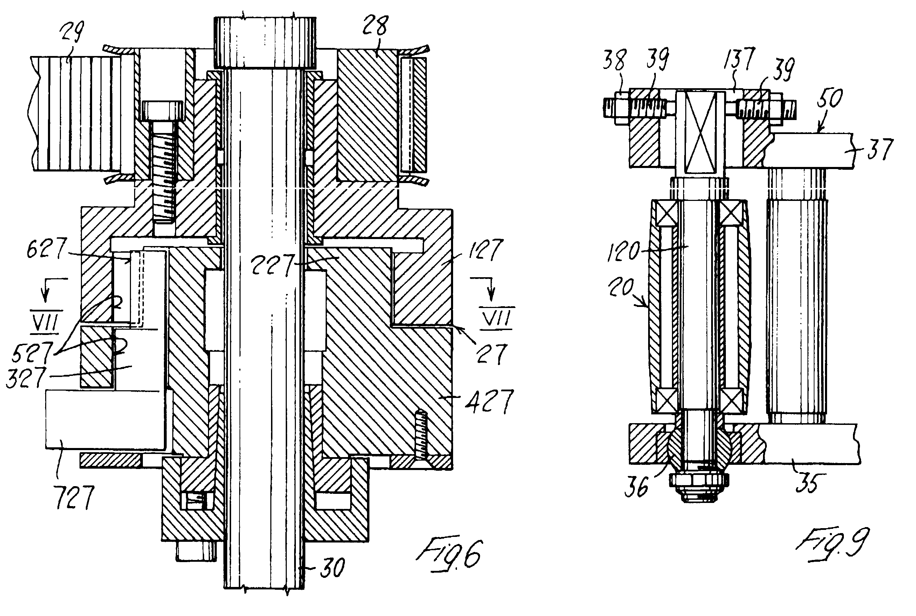

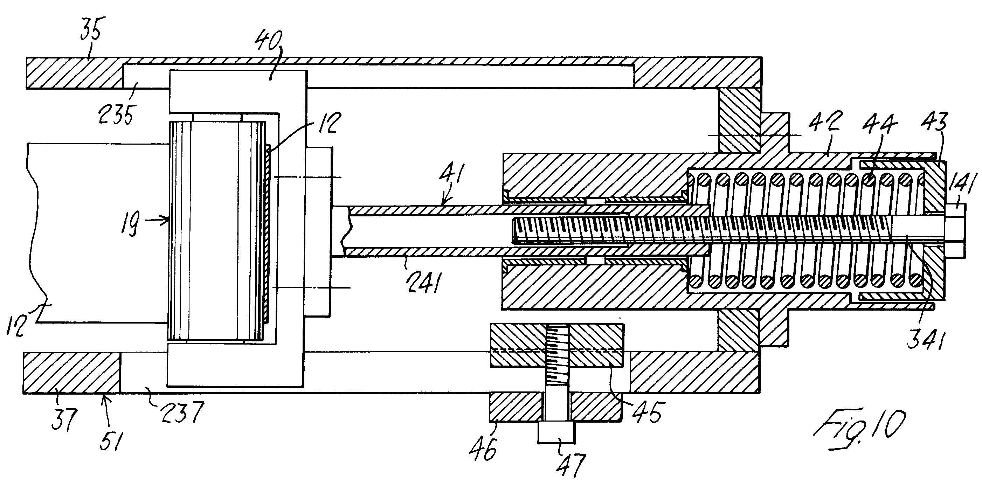

The automatic engagement and disengagement coupling 27 consists of a cup-shaped part 127 fitted so that it rotates integrally and coaxially with a pulley 28 rotated by means of a belt 29. A coaxial element 227 is engaged in rotation in the cup 127. The element 227 is fitted on and rotates integrally with a transmission shaft 30, while the cup 127 and the pulley 28 are fitted freely rotatably on the said shaft 30 and coaxially with it. Removable coupling means 327 are provided between the element 227 and the cup 127. In particular, the element 227 has a peripheral flange 427 which is superimposed on the facing annular end of the cup 127, while a hole 527 whose axis is orientated parallel to the axis of the shaft 30, and therefore parallel to the axis of the cup 127 and of the element 227, is made in the element 227. The axis of the hole 527 is disposed in the peripheral area of the part of the element 227 engaged in the cup 127, and is slightly inset from the peripheral edge of the said part, the hole having a diameter such that in the area of the flange 427 it is radially inside the said flange 427, while in the area of the element 227 engaged in the cup 127 it extends partially into the said part and partially into the peripheral wall of the cup 127, thus forming two hollows, one in the element 227 and the other in the cup 127, which together form the complete section of the hole 527. A pin 327 which is housed rotatably about its axis in the hole 527 has, in its terminal area and over a portion whose length corresponds to the axial length of the peripheral wall of the cup 127, a flattening 627. This flattening is greater than 180°, so that when the pin 327 is rotated it can enter a disengaged position in which its flattened part extends completely inside the hollow in the element 227 (Fig. 8) or an engaged position in which it projects into both the hollow in the element 227 and the complementary hollow in the cup 127 (Fig. 7). The pin 327 has a radial operating lever 727 whose length is such that it projects beyond the periphery of the element 227 in both the extreme positions of engagement and disengagement of the pin 327 (Fig. 8). Preferably, the free end of the lever 727 is rounded on its front face with respect to the direction of rotation of the joint, while on the opposite side it is subject to the action of elastic means 827 interposed between the lever and an opposing stop surface in the element 227, these elastic means 827 pushing the lever 727 securely into the active position of engagement of the element 227 and of the cup 127. The flange 427 may advantageously have an axial dimension greater than that of the lever 727 which is housed in a hollow formed in the flange 427 and on whose free end there is superimposed a cover which retains the pin 327 axially in the hole 527. Additionally, the hollow 927 is made V-shaped with its vertex coinciding with the hole 527, while the two opposing walls form, respectively, the limiting stop of the lever 727 in the engagement position and the limiting stop in the disengagement position together with the stationary support of the elastic element 827, which consists of a helical spring whose opposite ends are engaged in blind holes in the facing walls of the lever 727 and the hollow 927.

According to a further characteristic, at least one of the two surfaces of the flattening 627 is made with a convex curve, substantially corresponding to the radius of the element 227 and disposed in line with the said element as a continuation of its peripheral surface in the position of disengagement of the pin 327 (Fig. 8).

The lever 727 is operated by removable pressing means 32 which interact with the peripheral surface of the flange 427 of the element 227. The pressing means 32 consist of a pressing member 132 which has a curved surface 232 for contact with the peripheral face of the flange 427 and before which there is provided an inclined surface 332 to bear against the projecting part of the lever 727 even when the pin 327 is in the disengaged condition. The pressing member 132 is fitted on a branch of an angled lever 432 which together with a linear actuator 34 forms part of a mechanism, for example an articulated quadrilateral. In particular, the angled lever 432 is pivoted in the area of its angle so that it can oscillate about an axis 33 parallel to the axis of the coupling 27. The opposite end of the angled lever 432 is hinged to the rod 134 of a linear actuator 34. This may be of the mechanical, electric, hydraulic, pneumatic or similar type, and is controlled by the central control unit of the packing machine. The opposite end of the linear actuator 34 is also hinged to the frame.

In normal operating conditions (Figs. 6 and 7) the pressing member 132 is spaced apart from the coupling 27 by a distance greater than the projection of the lever 727 which is in the engagement position, and therefore does not interfere with the lever. When the packing machine detects the presence of a defective pack, it causes the activation of the rejection unit and also, in synchronization with the instant at which the rejected pack would have been discharged into the drying conveyor, the activation of the linear actuator 34. This brings the pressing member 13 to a position against the peripheral surface of the flange 427 of the element 227 (Fig. 8); the lever 727 is brought into interaction with the pressing member 132 which moves it angularly backwards into the position of disengagement of the element 227 from the cup 127, while the projecting part of the lever 727 is brought to bear against the pressing member, stopping the element 427 and consequently the belts 1, 2 exactly in the position of the belts in which they would have received the next pack if it had not been rejected. The pressing member 132 may advantageously be made of anti-friction material.

The processing machine moves the actuator 34 in the direction of the removal of the pressing member 132 from the coupling 27 to resume the advance of the belts 1, 2 in synchronization with the discharge of the next finished pack into the drying conveyor. The lever 727 is free to spring outwards by the action of the spring 827, bringing the pin 327 into the position of engagement of the element 227 with the cup 127, as soon as the two hollows forming the terminal portion of the hole 527 coincide with each other.

With reference to Fig. 9, the end return rollers of the propelling belts 1, 2 and in particular the return roller 20 at the entry end are made adjustable with respect to the inclination of their axles 120 in such a way as to compensate for any vertical misalignment of the belts 1, 2. In particular, the inclination of the axle 120 is adjustable in a vertical plane orientated in the longitudinal direction of the propelling belts 1, 2. The lower end of the axle 120 is mounted in a base plate 35 by means of a spherical support 36 which permits the inclination of the axle 120. The opposite upper end of the axle 120 is engaged in a slot 137 in an upper plate 37 and is locked in position between opposing threaded adjusting pins 39 which are orientated parallel to the slot 137 and which can be locked by means of lock nuts 38.

According to Fig. 10, the terminal module 16 with which the drive rollers 18 of the propelling belts 1, 2 are associated also contains the tensioning rollers 19 of the belts 1, 2. The said tensioning rollers 19 are made slidable transversely with respect to the conveyor channel and are subjected to an elastic force in the direction of removal from the conveyor channel, interacting with the runs of the belts 1, 2 outside the panels 3, 3'.

A fork 40 in which at least one tensioning roller 19 is supported is fitted in two opposing upper and lower plates 35, 37 of a box for the drive rollers 18, the tensioning rollers 19 and the other diverting rollers. The fork 40 is orientated substantially vertically and can oscillate freely under the action of the corresponding belt 1, 2 through a certain angle about a horizontal axis perpendicular to the axis of the tensioning roller 19, thus being inclined with respect to the vertical position. Its upper and lower ends, which are suitably shaped, are engaged in two parallel and vertical coinciding guides 235, 237 formed in the two plates 35 and 37, the width of each guides being such that they permit the oscillation of the fork 40 with respect to the vertical position through a predetermined maximum angle. The fork 40 is carried at the end of a rod 41 which is fitted slidably in a wall which is parallel to the belt 1, 2 and transverse with respect to the fork. The said wall carries, or is shaped in the form of, a stationary tubular housing 42 coaxial with the rod 41 and disposed on the side of the wall facing the fork 40, while the rod 41 emerges from a base 43 of the said tubular housing 42 with an enlarged end 141 which bears on the edges of a through hole in the said base 43. The base 43 made in cup form is telescopically slidable inside the tubular housing 42, and a helical spring 44 orientated coaxially with the rod 41 is interposed between the base and the opposite internal end wall of the tubular housing 42. The rod 41 is made in two parts 241, 341 which are engaged with each other by means of coaxial internal and external threads which can be screwed into or out of each other to adjust the compression of the spring 44. The guide 237 in the lower plate 37 is associated with adjustable end stop means for the sliding of the fork 40 which limit the external travel of the rod 41 if the belt 1, 2 breaks. In particular, the guide 237 consists of an oblong slot while the stop means consist of a transverse plate 45 which can be locked in position along the guide 237. In the example, the transverse plate 45 on the internal side of the plate 37 is associated with a plate 46 on the external side of the plate, and can be locked in position by means of a screw 47 for tightening the two plates 45, 46 against each other.

## Claims

1. Drying and discharge conveyor for finished packs of cigarettes or similar, particularly in a cigarette packing machine, comprises a channel (3, 3', 7) for a row of packs (P) of cigarettes disposed one adjacent to the next, the lateral walls of this channel consisting of panels (3, 3') along which a continuous conveyor belt (1, 2) slides by steps in the direction of the axis of the channel, these belts (1, 2) interacting by frictional adhesion with the facing opposite sides of the packs (P) of cigarettes, characterized in that in the conveyor channel the packs (P) are subjected to a flow of drying air, preferably hot, and form the upper wall of a lower duct (C) for the drying air which is provided in the area of the bottom of the conveyor channel.

2. Conveyor according to Claim 1, characterized in that the conveyor channel for the packs (P) is covered above and possibly also partially laterally by a removable or openable wall (51) which forms at least one upper duct (C') for the preferably hot drying air, the bottom of the said upper duct (C') consisting of the upper faces of the packs (P) in the conveyor channel.

3. Conveyor according to Claim 1 or 2, characterized in that it is housed in a chamber separated from the exterior by lateral shell walls (52) and by top walls (51) which are removable, possibly in a modular way, and/or partially openable, this chamber possibly forming or possibly communicating at least with the upper duct (C') for the drying air.

4. Conveyor according to one or more of the preceding claims, characterized in that means (9, 10, 12) of taking in and guiding and also of heating the air are provided alternatively or in combination in the lower duct (C) for the drying air and/or in the upper duct (C') for the drying air and/or in the chamber (51, 52) housing the conveyor.

5. Conveyor according to Claim 4, characterized in that the means of taking in and guiding the air and also of heating it consist alternatively, or in combination, of fans (9) associated with heat exchanger elements (10) and/or of motors or parts, operating units and similar (12, 112, 212) which generate heat and dissipate it into the environment, the said motors, parts or operating units (12, 112, 212) being housed directly in the supporting frame of the conveyor, preferably under the conveyor channel and inside the chamber (51, 52), or ducts being provided for the guidance of a flow of heated air from the said motors, parts or operating units into the chamber (51, 52) housing the conveyor and/or into the upper duct (C') and/or into the lower duct (C) for the drying air.

6. Conveyor according to one or more of the preceding claims, characterized in that in the conveyor channel the packs (P) rest on longitudinal sliding guides (5) which are raised above the bottom (7) of the conveyor channel and which leave open a substantial portion of the transverse section of the channel near the lower sides of the packs, while in the area underneath the packs (P) the conveyor channel has at least one and preferably a plurality of drying air supply apertures (107).

7. Conveyor according to one or more of the preceding claims, characterized in that the conveyor channel is supported by a frame which also forms the ducts (8, 108, 308) for the supply of drying air and the housings for means (9) of taking in and guiding the ambient air into the lower duct (C), such as fans or similar, and/or for means (9, 10) of heating the air, the said fan and heater means (9, 10) being provided also in combination and in such a way that they can be activated simultaneously or alternatively, while the drying air to be supplied to the lower duct (C) is taken directly from the external environment or from the interior of the chamber (51, 52) housing the conveyor or from both simultaneously.

8. Conveyor according to one or more of the preceding claims, characterized in that the conveyor channel support frame consists of a plurality of tubular columns (8) spaced apart from each other, at least some of which are provided with apertures (108) for the intake of the ambient air and apertures (308) for the delivery of the air, coinciding with the apertures for the supply of the air (107) into the bottom wall (7) of the conveyor channel, while the fan and/or heater means (9, 10) are housed inside the said tubular columns (8) or in the area of the entry apertures (108) of the columns.

9. Conveyor according to one or more of the preceding claims, characterized in that on the conveyor channel support frame and inside the housing chamber formed by a top and lateral shell (51, 52) there is housed a pump (12) for generating depressurized air with the associated driving motor, whose cooling fan (212) takes the cooling air (11) from the exterior of the housing chamber and discharges inside the chamber, and/or possibly into the upper duct (C') for the drying air and/or into the lower duct (C) preferably through an associated tubular column (8) of the conveyor channel support frame communicating (108') with the said conveyor housing chamber.

10. Conveyor according to Claim 9, characterized in that it is provided in combination with a packing machine which uses depressurized air.

11. Conveyor according to Claims 9 and 10, characterized in that the discharge from the depressurization pump (12) passes alternatively and/or in combination into the conveyor housing chamber and/or into the upper duct (C') and/or into the lower duct (C) for the drying air.

12. Conveyor according to one or more of the preceding claims, characterized in that the lower duct (C) and/or the upper duct (C') and/or the conveyor housing chamber may have apertures for the discharge of the flow of drying air, the lower duct (C) being provided with the said apertures preferably at the ends of the conveyor channel.

13. Conveyor according to Claim 12, characterized in that the conveyor housing chamber is open on the bottom face for the generation of a convective flow of hot air upwards, in particular into the upper duct (C') for the drying air communicating with the chamber.

14. Conveyor according to one or more of the preceding claims, characterized in that at least one of the lateral panels (3, 3') is associated with means (50) of heating the panels and that these means are disposed inside the conveyor housing chamber and/or inside the upper duct (C') for the drying air and/or in a chamber communicating with the duct.

15. Conveyor according to one or more of the preceding claims, characterized in that the lateral panels (3, 3') of the conveyor channel are supported so that they may be moved perpendicularly with respect to the axis of the conveyor channel, guide means (23, 203) being provided for the sliding and continuous adjustment of the position, these means being associated with at least one of the two panels (3, 3') or as an alternative to the former or in combination with the same means of mutual engagement (203', 408, 508) for the positioning and locking in different predetermined positions associated with the other (3') of the two panels (3, 3'), at least one of the panels (3) being provided on the side on which the belt slides with a surface (403) which can yield elastically in the transverse direction with respect to the conveyor channel.

16. Conveyor according to Claim 15, characterized in that the bottom wall (7) of the conveyor channel consists of two parts (207, 207') each of which is carried by and projects from one of the two panels (3, 3'), these parts having dimensions in the transverse direction with respect to the conveyor channel such that one overlaps the other in any of the two extreme positions of maximum closeness and maximum separation of the two lateral panels (3, 3').

17. Conveyor according to Claim 16, characterized in that in the area of the aperture (107) for the supply of the drying air the two parts (207, 207') of the bottom wall (7) of the conveyor channel are made comb-shaped, with strips coinciding with each other and overlapping each other.

18. Conveyor according to one or more of the preceding claims, characterized in that the conveyor channel is made in modular form, with the provision of at least one initial module (15) with a segment of lateral panels (3, 3'), a segment of median supporting guide (5), a segment of bottom wall (7) and one or more return rollers (20) for each propelling belt (1, 2); at least one terminal module (16) with a segment of conveyor channel similar to that in the initial module (15) and with at least one belt tensioning means (19), a drive roller (18) and one or more return rollers for each propelling belt (1, 2); and one or more intermediate modules (17, 17') each of which comprises a segment of conveyor channel similar to those in the initial and terminal modules (15, 16), the wall and/or shell parts (51, 52) which form the upper duct (C') for the drying air and the chamber housing the conveyor also being made in modular form.

19. Conveyor according to Claim 18, characterized in that each module (15, 16, 17, 17') is provided with a supporting column (8), each of the supporting columns or only some of them being associated with means (9, 10, 12, 112, 212) for generating a flow of drying air, in particular hot air.

20. Conveyor according to Claim 18 or 19, characterized in that the return rollers (20), the belt tensioning means (19) and the drive rollers (18) are fitted in boxes or cages (60, 61) which are also movable transversely with respect to the longitudinal axis of the conveyor channel, in a way similar and corresponding to the lateral panels (3, 3') of the channel.

21. Conveyor according to one or more of the preceding claims, characterized in that the motive power for the propelling belts (1, 2) is transmitted to the drive rollers (18) by means of a mechanism in which a coupling (27) for automatic and instantaneous engagement and disengagement is provided.

22. Conveyor according to Claim 21, characterized in that the propelling belts (1, 2) are driven continuously or by steps in synchronization with each other and with a processing machine provided in combination with and before the conveyor, it being possible to provide an intermittent drive device in the common drive mechanism of the propelling belts (1, 2) or in the separate drive mechanisms of each belt (1, 2).

23. Conveyor according to Claim 21, characterized in that a precision speed controller may be provided in the common drive mechanism or in the separate drive mechanisms of the propelling belts (1, 2).

24. Conveyor according to one or more of Claims 21 to 23, characterized in that the coupling (27) for automatic and instantaneous engagement and disengagement consists of a first and a second coupling part which are coaxial with each other, are cylindrical (127, 227, 427), and rotate one inside the other, the first part (127) rotating integrally with a pulley (28) connected dynamically (26) to the drive motor, and the second part (227, 427) rotating integrally with a transmission shaft (30) connected dynamically to the drive rollers (18) of the propelling belts (1, 2), it being possible to engage these two parts with each other in rotation by means of at least one radial projection (327, 627) supported in one of the said two coupling parts (127, 227) so that it may be moved alternatively radially outwards, towards the other coupling part (127), in the position of engagement with a hollow formed in the peripheral surface of the said other coupling part (127), and radially inwards with respect to the peripheral surface of the coupling part (227, 427) in which the projection (327, 627) is supported, to a position in which it does not interfere with the other coupling part (127), elastic means (827) being provide to push the said projection (327, 627) into the engaged position radially outward from the peripheral surface of the coupling part (227, 427) in which it is supported, means (727, 32, 34) being provided to move the said projection (327, 627) into the said two positions.

25. Conveyor according to Claim 24, characterized in that the projection (627) is carried by means (327) rotating about an axis parallel to the axis of the two coupling parts (127, 227, 427) and the operating means consist of an operating lever (727) orientated radially on and integral with the means (327) which carry the projection (627), this operating lever (727) projecting radially beyond the external cylindrical peripheral surface of the coupling part (427) associated with the means (327) supporting the projection (627), and interacting with means (32) of pressing the lever into a radially withdrawn position with respect to the said cylindrical peripheral surface of the said coupling part (427), the operating lever (727) projecting radially outwards in a position of slight backward inclination with respect to the radial orientation and in relation to the direction of rotation of the coupling (27) in both the positions of engagement and disengagement of the two coupling parts (227, 427), the position of the operating lever (727) in which it is rotated backwards with respect to the outer peripheral surface of the coupling part (427) associated with it corresponding to the condition of disengagement of the two coupling parts (127, 227).

26. Conveyor according to Claim 25, characterized in that the first coupling part consists of a cylindrical cup (127) in which is engaged in a freely rotatable way a complementary extension (227) of the second coupling part which has a flange (427) outside the cup (127), an axial cylindrical hole (527) being made with such a diameter and in such a position that the whole of its section lies within the flange (427), while it also extends into the area of the cup (127) and of the extension (227) housed in it, the section of the hole (527) being formed partially in the facing surfaces of the cup (127) and of the extension (227) engaged in it, while a hollow (927) in the flange (427) which coincides with the hole (527) and is peripherally open houses the radial operating lever (727) of a pin (237) which in the portion coinciding with the axial extension of the cup (127) has a flattening (627) preferably greater than 180° and such that, depending on the angular position of the pin (327), the flattened part projects beyond the peripheral surface of the extension (227) of the second coupling part or is completely withdrawn into this part or extends in line with it.

27. Conveyor according to one or more of the preceding claims, characterized in that the pressing means (32) are movable alternatively into a position of contact with the outer peripheral surface of the flange (427) or the second coupling part and into a position radially removed from this part by a distance greater than the projection of the operating lever (727) from the said peripheral surface, while the pressing member (132) has a contact surface curved to correspond to the said flange (427) and an inclined front surface to bear against the projecting part of the lever (727), for the angular displacement of the lever into the disengaged position and to stop the element associated with the flange (427) in a predetermined position.

28. Conveyor according to one or more of the preceding claims, characterized in that it is provided in combination with a machine producing packs (P), for example a cigarette packing machine comprising a control unit and means of detecting and expelling defective packs, the actuators (34) of the engagement and disengagement coupling (27) being operated by the said control unit of the packing machine when a pack is expelled and/or when at least some operating parts of the machine stop.

29. Conveyor according to one or more of the preceding claims, characterized in that the inclination of the return rollers (20) of at least one end module (15, 16) is adjustable with respect to the vertical axis.

30. Conveyor according to one or more of the preceding claims, characterized in that the means (19) of tensioning the propelling belts (1, 2) are provided with adjustable elastic means (44) acting in the direction of the tensioning of the belts (1, 2) and with means (45, 46, 47) for limiting the travel in case of breakage of the belts (1, 2).

31. Conveyor according to Claim 30, characterized in that the tensioning means (19) of the propelling belts (1, 2) consist of rollers which are supported so that they are movable elastically transversely with respect to the belts and are pushed in the direction of the tensioning of the belts (1, 2) and so that they can oscillate freely and through a predetermined maximum angle (40, 237, 235) of oscillation and in both directions about an axis perpendicular to the axis of the rollers and to the belts (1, 2) and in the transverse direction of sliding of the rollers.
